# EUROPÄISCHE PATENTSCHRIFT

(11) **EP 0 531 982 B1**
(45) Veröffentlichungstag und Bekanntmachung des Hinweises auf die Patenterteilung: **20.12.1995**
(21) Anmeldenummer: 92115446.4
(22) Anmeldetag: 09.09.1992
(51) Int. Cl.: E01F 8/00

(54) **Transparente Kunststoffscheibe mit Vogelschutz und deren Verwendung**
Transparent plastic sheet with bird protection feature and its application
Plaque en matière plastique transparente ayant un caractère de protection des oiseaux et son utilisation

(30) Priorität: 13.09.1991 DE 4130467
(43) Veröffentlichungstag der Anmeldung: 17.03.1993
(73) Patentinhaber: Degussa Aktiengesellschaft, 60311 Frankfurt (DE)
(72) Erfinder: Oberländer, Klaus, W-6450 Hanau 9 (DE); Brand, Norbert, Dr., W-6100 Darmstadt (DE); Seelmann, Peter, A-1238 Wien (AT); Wachter, Heinz, A-2435 Ebergassing (AT)

(56) Entgegenhaltungen:
- EP-A- 0 407 852
- DE-U- 1 881 285
- DE-U- 8 314 371
- DE-U- 9 101 234

## Beschreibung

Die Erfindung betrifft transparente Kunststoffscheiben mit eingebetteten monofilen Kunststoffäden, die geeignet sind, im Falle eines Bruches der Kunststoffscheibe das Entstehen und Herabfallen von losen Bruchstücken zu verhindern oder verringern. Kunststoffscheiben dieser Art sind insbesondere für Lärmschutzwände geeignet.

Lärmschutzwände dieser Art sind bekannt aus der EP 0 407 852 A2 (≙ US-A 5,040,352). Die Kunststoffscheiben dieser bekannten Art erfüllen ihre Aufgabe, das Entstehen und Herabfallen von losen Bruchstücken zu verhindern, in ausgezeichneter Weise. In den beschriebenen Kunststoffscheiben können auch zusätzlich Streifen, Ornamente oder Figuren eingebettet werden, die dem Schutz von Vögeln dienen.

Aus der österreichischen Patentschrift 263 298 ist eine transluzente Bauplatte bekannt, die ein teilweise metallisiertes Gewebe eingegossen enthält. Das Gewebe ist eine Armierung der Bauplatte, kann jedoch im Falle eines Bruches die Entstehung von einzelnen Bruchstücken nicht verhindern, da ein Gewebe im Falle eines Bruches wegen der hohen Festigkeit des Kunststoffmaterials der Bauplatte zusammen mit dieser bricht. Außerdem verhindern die feinen Lichtöffnungen in dem Gewebe eine Transparenz der Bauplatte, so daß diese nur als Lichtelemente, nicht jedoch als Scheiben einsetzbar sind. Hinzu kommt, daß eine Metallisierung des Gewebes Reflexe oder Reflexionen bewirken kann, die zum einen störend sind und zum anderen an einer Seite eine nicht gegebene Transparenz vortäuschen können.

Aus der DE-U-84 35 283 sind transparente Bauplatten bekannt, bei der einzelne Teile, die im Falle eines Bruches entsteilen können, durch außenliegende Fangseile gesichert sind. Die vorgesehenen Bruchteile sind verhältnismäßig groß und können in weitere, immer noch verhältnismäßig große freie Bruchstücke zerbrechen. Diesen bekannten Platten können z. B. zum Zwecke des Vogelschutzes übliche Streifen (o. ä.) hinzugefügt werden.

Aus "Schweizer Ingenieur und Architekt", Nr. 13, 1988, Seiten 379 und 380 sind Schallschutzscheiben bekannt, die im Falle eines Bruches in lose Bruchstücke zerfallen. Zum Zwecke des Vogelschutzes können auf diese Scheiben z. B. 5 mm breite Vertikal-Streifen aufgeätzt werden. Dieser zusätzliche Aufwand ist teuer, erhöht die Gefahr der Verschmutzung der Scheibe und ist ästhetisch wenig ansprechend.

Da das Einbetten von Vogelschutzelementen in die Kunststoffscheiben, die in einem Stück gegossen werden oder aus gegossenen einzelnen Platten verbundscheibenmäßig zusammengesetzt werden, aufwendig ist, werden in der Praxis die Kunststoffscheiben von außen mit Vogelschutzsymbolen oder - Elementen beklebt. Die außen aufgeklebten Vogelschutzelemente unterliegen jedoch der Verwitterung und behindern das Reinigen der Scheiben. Außerdem haben diese Vogelschutzelemente den Nachteil, daß sie den optischen Eindruck der Kunststoffscheiben beeinträchtigen, der Vorteil der Transparenz der Scheiben geht weitgehend verloren. Das Bekleben der Scheiben mit einzelnen Raubvogelsilhouetten läßt zwar die Kunststoffscheiben in ihrer Umwelt nicht so störend erscheinen, einzelne Raubvogelsilhouetten dienen jedoch mehr der Ästhetik, als dem Vogelschutz.

Aufgabe der vorliegenden Erfindung ist daher eine Kunststoffscheibe der eingangs beschriebenen Art, die dem Vogelschutz gerecht wird ohne dabei in der Umwelt störend zu wirken. Die Ästhetik einer transparenten Kunststoffscheibe soll erhalten bleiben, ohne daß aufwendige oder kostspielige Maßnahmen erforderlich werden.

Diese Aufgabe wird bei einer transparenten Kunststoffscheibe der eingangs beschriebenen Art dadurch gelöst, daß die innen liegenden Kunststoffäden kontrastreich sind, mit einem Transmissionsgrad des für die Herstellung verwendeten Kunststoffes zwischen 0 und 65 %, daß die Fäden eine Dicke im Bereich 1 mm bis 5 mm aufweisen, daß der Abstand der Fäden höchstens 100 mm beträgt und daß die Flächendichte der Fäden zwischen 2,5 und 25 % beträgt.

Der Kontrast der Kunststoffäden wird nach DIN 5033 Farbmessung und 5036 strahlungsphysikalische und lichttechnischen Eigenschaften von Materialien bestimmt. Vorzugsweise hat das Material oder der Kunststoffaden selbst einen Transmissionsgrad von 0 bis 30 %, insbesondere 0 bis 10 %. Besonders günstig ist ein Transmissionsgrad von ca. 0 %. Für die Kontrastwirkung ist auch erforderlich, daß sich die Kunststoffäden vom Hintergrund abheben, d. h. z. B. eine andere Farbe haben. Verspiegelte Fäden sind hierfür ungeeignet, wenn sie z. B. den Himmel vor der Scheibe gegen den Himmel hinter der Scheibe reflektieren oder zu unerwünschten Reflexen bzw. Reflexionen, z. B. der Sonne, führen. Vorteilhaft werden Fäden mit einer dunklen Farbe insbesondere schwarze Fäden verwendet. Fliegende Vögel erkennen eine solche transparente Wand dank deren kontrastreichen Fäden aus einigen Metern Entfernung noch rechtzeitig als Hindernis und können die Kunststoffwand entsprechend umfliegen.

Besonders vorteilhaft sind dabei Ausführungen, bei denen die Kunststoffaden 1 mm bis 5 mm dick sind. Insbesondere der Dickenbereich 1,8 mm bis 3,0 mm, bevorzugt 2,0 mm bis 2,5 mm, hat sich hinsichtlich der geforderten Eigenschaften, leichtes Einbringen in die Kunststoffscheibe, genügende Festigkeit im Falle eines Bruches ausreichende Vogelschutzwirkung und keine wesentliche Beeinträchtigung der gesamten Transparenz der Scheibe als besonders günstig erwiesen.

Üblicherweise verlaufen die Fäden in der Kunststoffscheibe horizontal, da die Scheiben seitlich eingespannt werden; der Zusammenhalt im Falle eines Bruches ist dann besonders günstig. Üblicherweise werden die Fäden parallel zueinander verlegt. Falls gewünscht oder erforderlich können zwei Lagen von Fäden in die Scheibe eingebracht werden, die dann vorzugsweise in zwei Richtungen verlaufen, wobei ein Winkel von 90°C zwischen Fäden unterschiedlicher Lagen besonders vorteilhaft ist. Eine solche Ausführung sieht von außen betrachtet aus wie ein Gittergewebe.

Üblicherweise wird ein Fadenabstand zwischen benachbarten Fäden von höchstens 100 mm gewählt, darüber sinkt die Wirkung des Vogelschutzes bzw. der Sicherung von Bruchstücken deutlich ab. Vorzugsweise wird ein Fadenabstand bis zu 50 mm gewählt, insbesondere wenn die Fäden horizontal verlaufen, da Vögel vermutlich horizontale Hindernisse weniger gut erkennen als vertikale.

Die Flächendichte der kontrastreichen Fäden, das heißt der Prozentbereich der von den Fäden in der gesamten Kunststoffscheibe verdeckten Fläche, reicht üblicherweise von 2,5 bis 25 %. Vorzugsweise, insbesondere bei horizontalen Fäden beträgt die Flächendichte mindestens 5 %, besonders vorteilhaft sind 6 bis 10 %. Bei vertikal verlegten Fäden kommt man mit einer etwas geringeren Flächendichte aus, so daß hier der vorteilhafte Bereich bei 5 bis 8 % liegt. Unterhalb dieser Flächendichte geht die Wirkung des Vogelschutzes schnell verloren, oberhalb dieser Werte bleiben die Fäden auch in größerer Entfernung sichtbar und wirken entsprechend unästethisch, das heißt die vorteilhafte Wirkung der Transparenz der Kunststoffscheibe geht weitgehend verloren.

Typische Scheibendicken liegen bei 4 bis 40 mm, bevorzugt sind 12 bis 25 mm. Die Scheiben werden üblicherweise in einer Größe von 1,5 m x 1 m bis 2 m x 3 m gefertigt, für spezielle Anwendungen sind auch größere oder kleinere Ausführungen möglich.

Die Scheiben sind üblicherweise weitgehend klar durchsichtig (transparent), vorzugsweise farblos oder leicht z.B. rauchbraun getönt. Die farblosen, glasklar durchsichtigen Kunststoffscheiben haben üblicherweise einen Transmissionsgrad von mindestens 70 %, vorteilhaft ist eine Transmission von 90 bis 95 %. Getönte Ausführungen haben üblicherweise einen Transmissionsgrad von 45 bis 75 %, üblicherweise zwischen 50 und 60 %. Die Absorptionen der Fäden und der getönten Scheibe addieren sich dabei, so daß die Fäden auch weiterhin als kontrastreiche Elemente erkennbar sind.

Die Erfindung wird anhand einer Figur eines Ausführungsbeispiels näher erläutert.

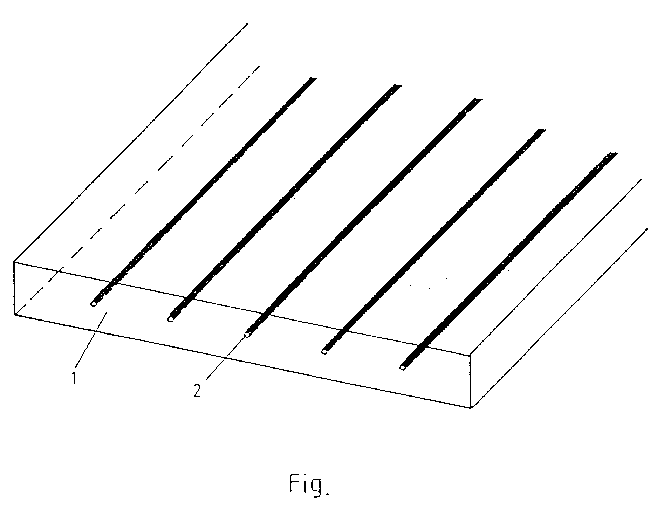

Die Figur zeigt eine erfindungsgemäße transparente Kunststoffscheibe 1 in Teilansicht. Die Scheibe ist ein Acrylglas (PMMA) mit einer Dicke von 20 mm. Die innen liegenden Kunststoffäden 2 sind monofil und aus schwarz eingefärbtem Polyamid. Der Transmissionsgrad des Polyamids ist praktisch 0. Das Scheibenmaterial ist glasklar durchsichtig und hat eine Lichttransmission von 92 %. Die Polyamidfäden 2 haben einen Durchmesser von 2,0 mm und sind in einem mittleren Abstand von 30 mm angeordnet, was einer Flächendichte der Kunststoffäden von 6,7 % entspricht.

In einem Feldversuch wurde eine solche Scheibe der Größe 2 m x 2 m neben einer gleich großen Scheibe mit nicht eingefärbten (also transparenten) Polyamidfäden gleicher Größe und gleicher Flächendichte und einer herkömmlichen mit Vogelschutzstreifen beklebten Scheibe aufgebaut. Die schwarz eingefärbten Fäden waren in einem Abstand von 6 m für eine normalsichtige Person noch gut sichbar, wirkten jedoch nicht störend. In einem Abstand von 10 m waren die schwarz eingefärbten Polyamidfäden noch wahrnehmbar, jedoch nicht mehr für den flüchtigen Betrachter auffällig. In einem Abstand von 20 m konnten die schwarzen Polyamidfäden nur noch unter Mühe wahrgenommen werden, es bestand praktisch kein Unterschied mehr zur Kunststoffscheibe mit transparenten Polyamidfäden. Im Vergleich hierzu haben die herkömmlichen mit Vogelschutz versehenen transparenten Scheiben, egal ob mit Streifen oder quadratischem Raster ausgestattet, auch in einem Abstand von 20 m ihre Auffälligkeit behalten. Die herkömmlich beklebten Scheiben wirkten gegenüber dei erfindungsgemäßen Scheibe deutlich weniger ästethisch, der "Durchblick" durch die Scheibe war stark gehindert.

Die erfindungsgemäße Scheibe hatte zudem den Vorteil der gegenüber den herkömmlich mit Vogelschutz versehenen Scheiben kostengünstigeren Herstellung und der (wegen der glatten Oberfläche) leichteren Reinigung mit Wasser.

## Patentansprüche

1. Transparente Kunststoffscheibe mit innen liegenden Kunststoffäden, die im Falle eines Bruches entstehende Bruchstücke weitgehend zusammenhalten,
**dadurch gekennzeichnet,**
daß die Fäden kontrastreich sind und einen Transmissionsgrad des für die Herstellung der Fäden verwendeten Kunststoffs von 0 - 65 % sowie eine Dicke im Bereich von 1 mm bis 5 mm aufweisen und daß der Abstand der Fäden höchstens 100 mm und die Flächendichte der Fäden zwischen 2,5 und 25 % beträgt.

2. Kunststoffscheibe nach Anspruch 1,
**dadurch gekennzeichnet,**
daß die Fäden schwarz eingefärbt sind.

3. Kunststoffscheibe nach Anspruch 1 oder 2,
**dadurch gekennzeichnet,**
daß die Fäden monofil sind.

4. Kunststoffscheibe nach Anspruch 1, 2 oder 3,
**dadurch gekennzeichnet,**
daß die Dicke der Fäden im Bereich 1,8 mm bis 2,5 mm liegt.

5. Kunststoffscheibe nach einem der vorhergehenden Ansprüche,
**dadurch gekennzeichnet,**
daß die Fäden horizontal verlaufen.

6. Kunststoffscheibe nach Anspruch 5,
**dadurch gekennzeichnet,**
daß der Fadenabstand höchstens 50 mm beträgt.

7. Kunststoffscheibe nach Anspruch 6,
**dadurch gekennzeichnet,**
daß die Flächendichte der Fäden zwischen 5 und 25 % beträgt.

8. Kunststoffscheibe nach einem der Ansprüche 1 bis 4,
**dadurch gekennzeichnet,**
daß die Fäden vertikal verlaufen.

9. Kunststoffscheibe nach Anspruch 8,
**dadurch gekennzeichnet,**
daß die Flächendichte der Fäden zwischen 2,5 und 20 % liegt.

10. Kunststoffscheibe nach einem der vorhergehenden Ansprüche,
**dadurch gekennzeichnet,**
daß die Scheibendicke im Bereich 4 bis 40 mm liegt.

11. Kunststoffscheibe nach Anspruch 10,
**dadurch gekennzeichnet,**
daß die Scheibendicke in einem Bereich von 12 bis 25 mm liegt.

12. Verwendung der Kunststoffscheibe nach einem der vorhergehenden Ansprüche für eine Lärmschutzwand.

## Claims

1. A transparent plastics pane comprising internal plastics threads which substantially hold together any fragments produced in the event of a fracture, characterised in that the threads are high-contrast, the plastics used for manufacturing the threads has a transmission ratio of 0 - 65%, the threads have a thickness in the range from 1 mm to 5 mm, the distance between the threads is at most 100 mm and the surface density of the threads is between 2.5 and 25%.

2. A plastics pane according to claim 1, characterised in that the threads are dyed black.

3. A plastics pane according to claim 1 or 2, characterised in that the threads are monofilar.

4. A plastics pane according to claim 1, 2 or 3, characterised in that the thickness of the threads is in the range from 1.8 mm to 2.5 mm.

5. A plastics pane according to one of the preceding claims, characterised in that the threads extend horizontally.

6. A plastics pane according to claim 5, characterised in that the distance between threads is not more than 50 mm.

7. A plastics pane according to claim 6 characterised in that the surface density of the threads is between 5 and 25%.

8. A plastics pane according to one of claims 1 to 4, characterised in that the threads extend vertically.

9. A plastics pane according to claim 8 characterised in that the surface density of the threads is between 2.5 and 20%.

10. A plastics pane according to one of the preceding claims, characterised in that the thickness of the pane is from 4 to 40 mm.

11. A plastics pane according to claim 10, characterised in that the thickness is in the range from 12 to 25 mm.

12. Use of the plastics pane according to one of the preceding claims as a noise barrier.

## Revendications

1. Vitre de matière plastique transparente comportant des fils de matière plastique internes, qui retiennent largement les fragments formés en cas de rupture, caractérisée en ce que les fils sont contrastés et présentent un degré de transmission de la matière plastique utilisée pour la fabrication des fils de 0 à 65 % ainsi qu'une épaisseur dans la plage de 1 à 5 mm, et en ce que la distance des fils est au maximum de 100 mm et la densité superficielle des fils est de 2,5 à 25 %.

2. Vitre de matière plastique selon la revendication 1, caractérisée en ce que les fils sont de couleur noire.

3. Vitre de matière plastique selon la revendication 1 ou 2, caractérisée en ce que les fils sont monofilaires.

4. Vitre de matière plastique selon la revendication 1, 2 ou 3, caractérisée en ce que l'épaisseur des fils est située dans la plage de 1,8 à 2,5 mm.

5. Vitre de matière plastique selon l'une quelconque des revendications précédentes, caractérisée en ce que les fils s'étendent horizontalement.

6. Vitre de matière plastique selon la revendication 5, caractérisée en ce que la distance des fils est au maximum de 50 mm.

7. Vitre de matière plastique selon la revendication 6, caractérisée en ce que la densité superficielle des fils est comprise entre 5 et 25 %.

8. Vitre de matière plastique selon l'une quelconque des revendications 1 à 4, caractérisée en ce que les fils s'étendent verticalement.

9. Vitre de matière plastique selon la revendication 8, caractérisée en ce que la densité superficielle des fils se situe entre 2,5 et 20 %.

10. Vitre de matière selon l'une quelconque des revendications précédentes, caractérisée en ce que l'épaisseur de la vitre se situe dans la plage de 4 à 40 mm.

11. Vitre de matière plastique selon la revendication 10, caractérisée en ce que l'épaisseur de la vitre se situe dans la plage de 12 à 25 mm.

12. Utilisation de la vitre de matière plastique selon l'une quelconque des revendications précédentes pour un mur antibruit.
